# FASCICULE DE BREVET EUROPEEN

(11) **EP 2 027 968 B1**
(45) Date de publication et mention de la délivrance du brevet: **03.11.2010**
(21) Numéro de dépôt: 07301759.2
(22) Date de dépôt: 28.12.2007
(51) Int. Cl.: B24B 9/14, G02C 13/00

(54) **Procédé de détermination de paramètres de monturisation d'une lentille ophtalmique**
Verfahren zur Bestimmung der Parameter für die Trägerherstellung einer Kontaktlinse
Method of determining parameters for adding frames to an ophthalmic lens

(43) Date de publication de la demande: 25.02.2009
(73) Titulaire: ESSILOR INTERNATIONAL (COMPAGNIE GENERALE D'OPTIQUE), 94220 Charenton-le-Pont (FR)
(72) Inventeur: Dubois, Frédéric c/o Essilor International, 94220 Charenton Le Pont (FR); Freson, David c/o Essilor International, 94220 Charenton Le Pont (FR)
(74) Mandataire: Cabinet Plasseraud

(56) Documents cités:
- WO-A-2007/065984
- FR-A- 2 898 690
- US-A- 6 122 063

## Description

La présente invention concerne un procédé de détermination de paramètres de monturisation d'une lentille ophtalmique suivant le préambule de la revendication 1. Un exemple d'un tel procédé est décrit dans le document WO 2007/065 984. La présente invention vise de manière générale le montage par emboîtement des lentilles ophtalmiques dans les drageoirs de montures de lunettes.

La partie technique du métier de l'opticien consiste à monter une paire de lentilles ophtalmiques sur une monture sélectionnée par un porteur. Ce montage se décompose en cinq opérations principales :
- l'acquisition de paramètres de monturisation, notamment des données géométriques des drageoirs des cercles de la monture sélectionnée par le porteur, en particulier la courbe décrite par le fond de drageoir et, le cas échéant, la forme de la section du drageoir ;
- le centrage de chaque lentille qui consiste à déterminer la position qu'occupera chaque lentille sur la monture afin d'être convenablement centrée en regard de la pupille de l'oeil du porteur de manière à ce qu'elle exerce convenablement la fonction optique pour laquelle elle a été conçue ;
- le palpage de chaque lentille qui consiste à déterminer les coordonnées de points sur chacune des faces de la lentille caractérisant la géométrie de son contour après détourage, puis
- l'élaboration d'une consigne de rayons de détourage (sous la forme d'une fonction dite de restitution de rayons) qui définit la position spatiale voulue du contour sur la lentille à détourer compte tenu des données géométriques lues du drageoir correspondant, des paramètres de centrage définis et du palpage de la lentille, et enfin,
- le détourage de chaque lentille qui consiste à usiner ou à découper son contour à la forme souhaitée, compte tenu de la consigne de rayons de détourage définie, avec éventuellement, en fin d'usinage, le biseautage qui consiste à réaliser sur le chant de la lentille, au moyen d'une meule de biseautage, un biseau destiné à maintenir la lentille dans le drageoir que comporte la monture.

Dans un souci de qualité et de simplification du travail de l'opticien, il est souhaitable que l'usinage soit suffisamment précis pour que la lentille s'emboîte exactement et sans forcer dans le drageoir de la monture choisie par le porteur. Cette précision permet en effet d'éviter à l'opticien d'être contraint à procéder plusieurs fois au détourage et au biseautage de la lentille pour son montage sur sa monture.

Le document WO 2007/065984 divulgue un procédé d'élaboration d'une consigne de détourage d'une lentille ophtalmique selon son contour final à emboiter dans un drageoir où l'on détermine l'épaisseur de ladite lentille ainsi que la largeur d'ouverture du drageoir en plusieurs points du contour final de la lentille.

Afin d'obtenir une très bonne précision, il est possible de déterminer les données géométriques du drageoir, dont la forme de sa section, en de nombreux points du contour des cercles de la monture. Cependant de telles mesures sont longues et fastidieuses.

Il en résulte un besoin de pouvoir déterminer les paramètres de monturisation d'une lentille ophtalmique de manière plus simple et plus rapide.

Ce problème est résolu selon la présente invention grâce à la méthode de détermination de paramètres de monturisation d'une lentille ophtalmique comprenant les étapes suivantes :
- approvisionner une monture de lunettes comprenant au moins une partie temporale dotée d'un drageoir destiné à permettre l'emboîtement d'une lentille ophtalmique ;
- déterminer la forme du profil du drageoir en un point de la partie temporale de ladite monture;
- comparer la forme du profil du drageoir déterminé en un point de la partie temporale de la monture à une base de données.

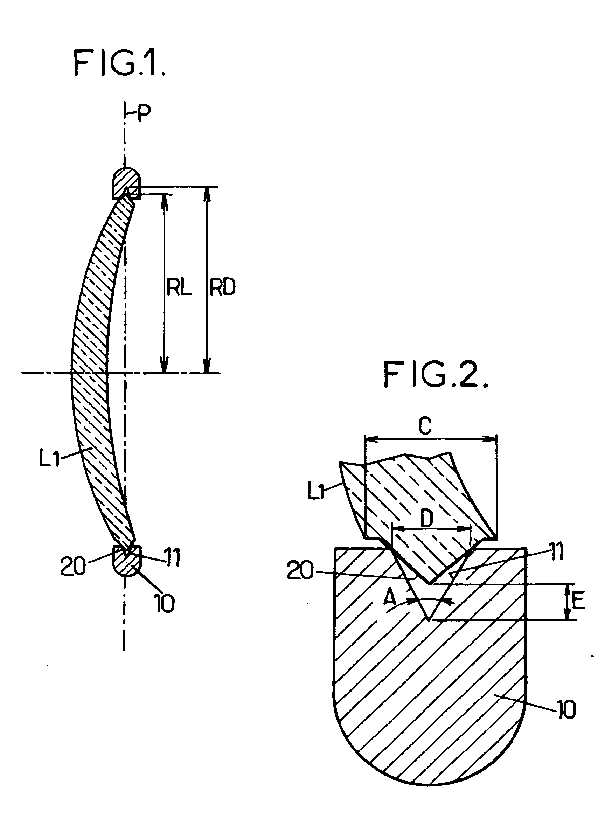

Dans le cadre de la présente invention on entend par « forme du profil du drageoir » la détermination des caractéristiques géométriques qui sont aptes au moins à permettre de déterminer en un point l'angle d'ouverture A du drageoir et/ou son ouverture D, ainsi que son positionnement angulaire par rapport au plan X, Y, noté plan P sur la figure 1, dit « angle de versage ».

Les inventeurs ont pu en effet constater que la détermination de la forme du drageoir en un point de la partie temporale de la monture est une information très précieuse susceptible de diminuer grandement le nombre de mesure de la forme du drageoir le long du contour du cercle de la monture. Ils ont notamment constaté que le mode de fabrication du cercle à partir d'un fil drageoir est susceptible de conduire à des variations de la forme du drageoir le long du contour du cercle final qui varient d'un mode de réalisation à l'autre. Ils ont pu mettre en évidence qu'une mesure de la forme du drageoir en un point de la partie temporale de la monture permet d'obtenir des informations sur le mode de fabrication du cercle de la monture.

Selon différents modes de réalisations qui peuvent notamment être combinés, le procédé selon la présente invention peut comporter les caractéristiques suivantes :
- la détermination de la forme du profil du drageoir se fait uniquement en un point pour chacun des cercles de la monture ;
- la monture est une monture fermée ;
- la monture est une monture semi-ouverte ;
- on détermine si la monture résulte d'une déformation d'un fil drageoir sur un bol ou d'une déformation d'un fil drageoir avec une machine à cercler 3D ;
- on associe à la forme du drageoir, déterminée en un point de la partie temporale de la monture, une donnée d'évolution de l'inclinaison du drageoir le long du parcours de la monture.

La présente invention se rapporte également à un procédé de fabrication d'une lentille ophtalmique comprenant les étapes suivantes :
- déterminer au moins les paramètres de monturisation d'une monture de lunettes choisie selon l'une quelconque des procédés de détermination revendiqué;
- calculer les paramètres de détourage comprenant le contour de la lentille finale et la forme d'un biseau le long de ce contour afin de permettre l'emboîtement de la monture de lunettes choisie.

Grâce au procédé selon l'invention, il est possible de déterminer simplement et rapidement la forme du drageoir et son inclinaison le long du contour des cercles de la monture choisie. De manière usuelle on nomme l'inclinaison du drageoir « angle de versage ». On peut ensuite utiliser ces données géométriques du drageoir d'un cercle pour optimiser la forme du biseau de la lentille à insérer dans le cercle de la monture choisie.

Il est alors possible de choisir le type d'ajustement désiré entre la monture et la lentille. A titre d'exemple il est alors possible d'obtenir des lentilles qui après détourage présentent un chant de faible épaisseur et où le biseau réalisé sur la lentille ne prend pas appui contre les arêtes définissant l'embouchure du drageoir mais s'insère dans le drageoir et prend appui sur ses flancs.

A titre d'exemple, lorsque la lentille présente une épaisseur faible et que son biseau s'enfonce à l'intérieur du drageoir, la distance séparant le sommet du biseau du fond du drageoir varie en fonction de l'angle d'ouverture du drageoir. La connaissance de cet angle permet par conséquent de calculer précisément ladite distance afin d'affiner les paramètres de monturisation.

L'invention trouve notamment une application avantageuse dans le cas où l'épaisseur de la lentille ophtalmique est inférieure à la largeur d'ouverture du drageoir en au moins un point de son contour final. On peut comparer l'épaisseur de la lentille ophtalmique et la largeur d'ouverture du drageoir en plusieurs points du contour final de la lentille ophtalmique pour en déduire des paramètres de monturisation, notamment la consigne de rayons de détourage de la lentille ophtalmique. Ainsi, si l'épaisseur de la lentille ophtalmique est supérieure à la largeur d'ouverture du drageoir, on déduit que l'enfoncement du biseau dans le drageoir est constant dans la mesure où les flancs du biseau prennent toujours appui sur les arêtes définissant l'embouchure du drageoir. En revanche, si l'épaisseur de la lentille ophtalmique est inférieure à la largeur d'ouverture du drageoir, on déduit que cet enfoncement varie en fonction de l'épaisseur de la lentille et qu'il est nécessaire de tenir compte de cette variation pour l'élaboration de la consigne de rayons de détourage.

Selon d'autres modes de réalisation, on choisit un profil de détourage des lentilles de manière à les rendre affleurantes par rapport aux bords des cercles de la monture.

La lentille ophtalmique est usuellement destinée à porter un biseau sur son chant et on calcule la distance destinée à séparer le fond du drageoir du sommet dudit biseau.

Ainsi, lors du détourage ultérieur de la lentille selon la consigne de rayons de détourage par un dispositif de détourage comprenant une meule pourvue d'une gorge de biseautage, cette consigne fournit au dispositif de détourage la longueur que chaque rayon de la lentille devra présenter, de son centre optique jusqu'au sommet de son biseau. Partant, la position du fond de la gorge de biseautage du dispositif de détourage étant précisément connue, le biseautage de la lentille est simple à mettre en oeuvre.

La consigne de rayons de détourage peut être définie sous la forme d'une fonction de restitution de rayons donnant, pour chaque rayon donné de la lentille ophtalmique, la longueur du rayon donné de la lentille ophtalmique.

Il est également possible de procéder à la déduction de la consigne de rayons de détourage en fonction de l'angle de versage formé entre la bissectrice du drageoir et la bissectrice du biseau.

Ainsi, lorsque le drageoir de la monture est versé, c'est-à-dire qu'il présente un angle non nul avec le plan général de la monture (plan passant par le pontet de la monture et normal aux deux branches de la monture lorsqu'elles sont en position dépliées), il peut être tenu compte du fait que cet angle a une influence sur la position du biseau de la lentille sur les flancs du drageoir de la monture. En effet, les deux arêtes du biseau ne prennent alors pas appui à la même hauteur sur les flancs du drageoir mais sont décalées l'une par rapport à l'autre si bien que la distance séparant le sommet du biseau du fond du drageoir varie.

A titre d'exemple, le document WO 2007/065984 décrit un procédé d'élaboration de consigne de détourage d'une lentille ophtalmique qui peut permettre d'utiliser les paramètres de monturisation déterminés selon la présente invention.

La description qui va suivre en regard des dessins annexés donnés à titre d'exemples non limitatifs, fera bien comprendre en quoi consiste l'invention et comment elle peut être réalisée.

Sur les dessins annexés :
- la figure 1 est une vue en coupe d'une lentille ophtalmique biseautée selon l'invention et emboîtée dans un drageoir de monture de lunettes ;
- la figure 2 est une vue partielle en coupe d'une partie de la lentille ophtalmique de la figure 1 ;
- la figure 3 représente une vue schématique d'un mode de détermination de la forme du drageoir en un point de la partie temporale de la monture selon l'invention ;
- la figure 4 représente une vue schématique d'un drageoir fabriqué par déformation sur un bol ;
- la figure 5 représente une vue schématique d'un drageoir fabriqué avec une machine à cercler 3D ;
- la figure 6 représente une vue schématique d'une partie en coupe de l'emboîtement entre un drageoir et une lentille biseautée.

Parmi les moyens bien connus, il est possible d'utiliser un appareil de lecture de contour et de section de drageoir de cercles de montures de lunettes tel que celui décrit dans le document EP 0819967. Il est également possible d'utiliser un dispositif de détourage de lentilles ophtalmiques tel que celui décrit dans le document FR 2784919 ou commercialisé par Essilor sous la marque Kappa et un appareil de palpage de lentilles ophtalmiques tel que celui décrit dans le document FR 2543039.

Un opticien équipe alors le porteur de la monture 10 choisie et repère la position des points pupillaires par rapport à chaque cercle de la monture 10, ces points pupillaires correspondant aux points situés en regard de la pupille de l'oeil du porteur sur le plan général P de la monture 10.

On entend typiquement par plan général P le plan qui passe par la pontet nasal reliant les deux cercles de la monture 10 et qui est orthogonal, d'une part, au plan de symétrie de la monture, et, d'autre part, au plan contenant les deux branches de ladite monture lorsqu'elles sont en position dépliées.

Le point pupillaire de chaque cercle est alors utilisé, lors du palpage du drageoir dudit cercle par un palpeur, comme origine de coordonnées du palpeur.

En variante, l'opticien peur réaliser cette opération de repérage à l'aide d'un logiciel d'acquisition et de reconnaissance d'images réalisant une identification électronique et/ou informatique des points pupillaires à partir d'une photo du visage du porteur équipé de la monture 10 choisie.

Sur la figure 1, on a représenté, en coupe, la section transversale d'une lentille ophtalmique L1 emboîtée dans un drageoir 11 d'un cercle de monture 10 de lunettes. Cet emboîtement est réalisé de telle sorte que les lentilles sont disposées selon un mode d'assemblage choisi sur ladite monture afin de convenablement exercer les fonctions optiques pour lesquelles elles ont été conçues.

Afin de réaliser un tel emboîtement, on relève diverses caractéristiques géométriques de la lentille ophtalmique L1 et du drageoir 11 de sa monture 10 afin de pouvoir usiner la lentille ophtalmique L1 selon un contour final adapté à réaliser précisément un tel emboîtement.

Lors d'une première étape selon l'invention, on relève les caractéristiques géométriques du profil du drageoir 11 en un point de la partie temporale de la monture. Pour cela, on peut, par exemple, utiliser un appareil de lecture de contour tel que celui décrit dans le document EP0819967 qui relève les coordonnées d'une pluralité de points du drageoir 11 et les transmet au système électronique et informatique qui les mémorise.

Plus précisément, le fond du drageoir 11 forme une rainure le long de la périphérie interne du cercle de la monture 10. Le drageoir 11 présente en outre, en section transversale, comme représenté sur la figure 2, un profil de dièdre dont les deux flancs se coupent au fond du drageoir 11 et forment l'un avec l'autre un angle d'ouverture A et conduisent à une largeur d'ouverture D du drageoir. Généralement, la section transversale du drageoir 11 est la même tout le long du contour formé par le drageoir 11, seule l'inclinaison du drageoir peut éventuellement changer et présenter une inclinaison importante par rapport au plan général P lorsque la monture 10 est fortement courbée.

Dans le cas d'une monture à cercles fermés comme ici représenté, la lentille L1 est taillée avec la présence d'un biseau 20 sur son pourtour et son épaisseur C peut être supérieure à la largeur d'ouverture du drageoir D.

L'invention ne se limite cependant en aucun cas à des montures à cercles fermés, mais peut également trouver des applications pour des montures semi-ouvertes où seulement une partie de la périphérie de la lentille est maintenue par emboîtage dans la monture. De telles montures peuvent par exemple comprendre un fil qui maintient la lentille. Dans ces cas le biseau de la lentille est remplacé par une rainure en général en forme de U et le fil est maintenu dans le drageoir de la monture qui a dans ces modes de réalisation la forme d'un U.

Le montage de la lentille L1 dans la monture 20 peut conduire à un écart E entre l'extrémité du biseau de la lentille L1 et le fond du drageoir 11.

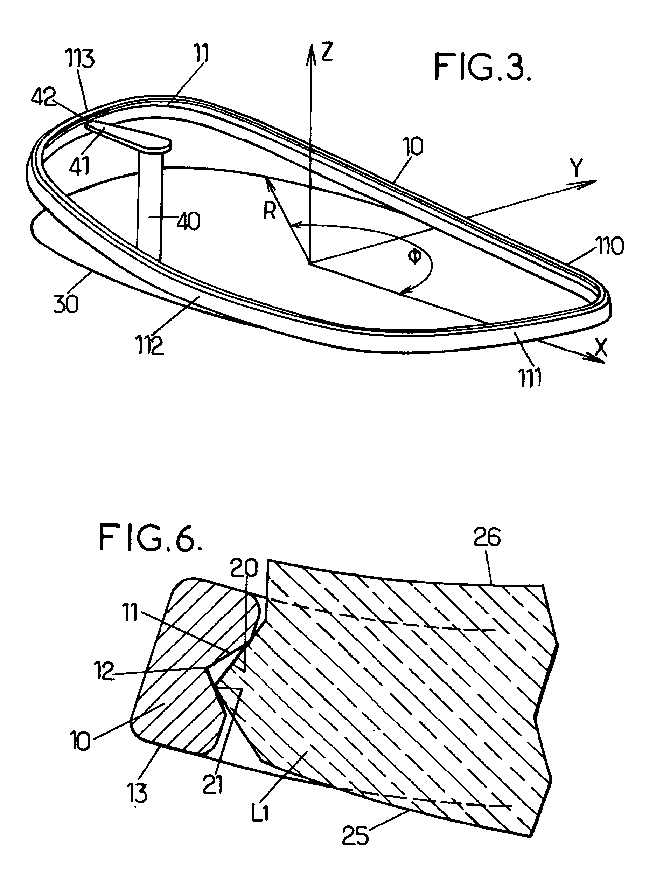

La figure 3 représente l'étape de mesure du profil du drageoir en un point de la partie temporale de la monture 10. La monture 10 comprend quatre parties principales : une partie supérieure 110, une partie nasale 111, une partie inférieure 112, une partie temporale 113. Il va de soi que chacun des cercles d'une même monture présente ces parties réparties de manière symétrique par rapport à l'axe nasal passant par le pont de la monture.

Le système de mesure de contour 40 comprend une partie mobile permettant de décrire un contour soit de manière polaire (∅, R, Z), soit de manière cartésienne (X, Y, Z).

De nombreux exemples, dont le document US 5,121,548, permettent de préciser le mode de fonctionnement de tels systèmes de mesure de contours. Le système représenté comprend un bras 41 au bout duquel se trouve par exemple une bille 42. La mesure s'effectue par suivi des points de contact de la bille 42 avec le fond ou les bords du drageoir 11.

De manière traditionnelle, le système de mesure de contour 40 permet de déterminer le contour du drageoir 11.

Il est en outre utilisé dans le cadre de la présente invention pour déterminer la forme du profil du drageoir en un point de la partie temporale 113 de la monture.

Le périmètre du contour du drageoir 11 peut être projeté sur le plan X, Y selon la trace 30, pour des calculs ultérieurs.

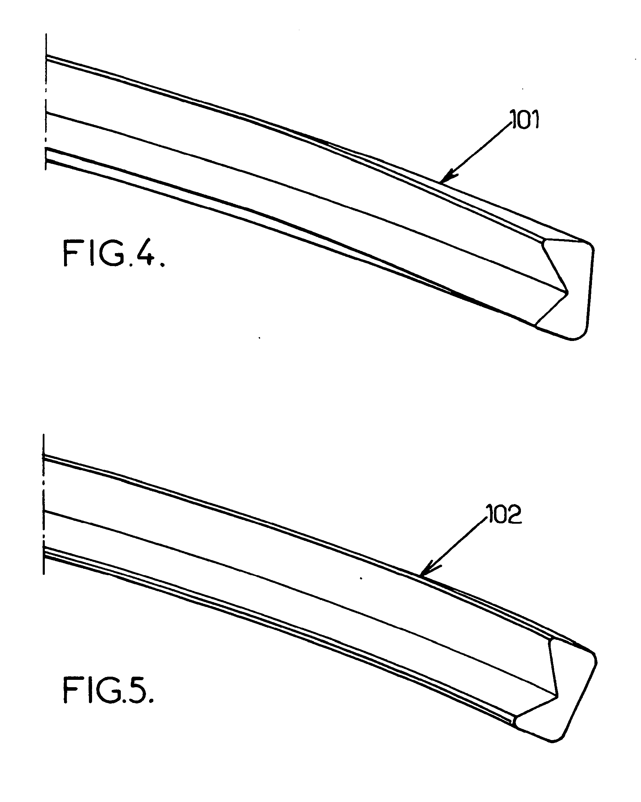

La figure 4 représente une vue schématique d'un drageoir fabriqué par déformation sur un bol. Selon ce mode de fabrication, on part d'un fil drageoir qui est mis en forme suivant un calibre plan, puis est déformé sur un bol à ménisque. Le drageoir résultant est sensiblement perpendiculaire au plan boxing sur l'ensemble du contour de la monture.

La figure 5 représente une vue schématique d'un drageoir fabriqué avec une machine à cercler 3D. Selon ce mode de réalisation, le fil drageoir est formé sur une plaque plane et matricé pour obtenir une monture ménisquée.

On constate que l'orientation du drageoir est différente selon le mode de réalisation de la figure 4 ou celui de la figure 5.

On note que les machines de taillage des verres sont pour la plupart aujourd'hui de type 3 axes. Le biseau taillé résultant est alors perpendiculaire au plan boxing.

Les inventeurs ont constaté que le biseau ainsi taillé peut s'emboîter aisément dans le cas d'une monture ménisquée au bol, à la déformation près de la monture lors de l'emboîtement.

Par contre, ils ont constaté que l'orientation du biseau ainsi fabriqué ne correspond pas à l'orientation du drageoir dans le cas d'un emboîtement dans une monture fabriquée avec une machine à cercler 3D. Il en résulte un besoin de calculer une correction d'emboîtement pour obtenir un sizing du verre permettant une fermeture satisfaisante du barillet de la monture.

La figure 6 illustre une vue schématique d'une partie en coupe de l'emboîtement entre un drageoir 11 d'une monture 10 et une lentille biseautée L1.

Dans le cas représenté, la pointe 21 du biseau 20 de la lentille L1 ne contacte pas le fond 12 du drageoir 11 mais un des bords du drageoir 11.

La lentille L1 comprend une face avant 25 et une face arrière 26. La partie avant de la monture 10 est désignée 13.

Grâce à la détermination en un point de la partie temporale de la monture de la forme du profil du drageoir, on peut déduire l'angle de versage, l'angle d'ouverture A et/ou l'ouverture D du cercle de la monture.

Si l'angle de versage correspond à l'orientation normale à la courbure de la monture au point de mesure dans la partie temporale de la monture, on peut déduire que le cerclage du fil drageoir a été réalisé par une machine à cercler 3D.

On peut alors faire l'hypothèse que l'angle de versage correspond à l'angle à la normale à la courbure de la monture sur tout le contour du cerclage. Il est également possible de tenir compte de la déformation prévue pour la monture lors de l'emboîtement. Dans ce cas, la trajectoire du biseau de la lentille est légèrement différente du contour de la monture non déformée. Grâce à ces informations, on peut déterminer la forme optimale du biseau de la lentille en vue de sa fabrication.

A titre d'exemple, on peut également calculer les points de contact entre le biseau de la lentille et le drageoir et en déduire des corrections en rayons et en Z. Le calcul de ces corrections peut avantageusement tenir compte de l'angle d'ouverture A et de l'ouverture D du drageoir.

I1 est ainsi par exemple possible de définir des données complémentaires, comprenant l'angle de versage du drageoir, utiles pour définir les consignes de taillage lors de l'utilisation d'une machine 5 axes.

La présente invention n'est nullement limitée au mode de réalisation décrit et représenté, mais inclus toute variante que l'homme du métier pourrait y apporter dans le cadre des revendications.

## Revendications

1. Procédé de détermination de paramètres de monturisation d'une lentille ophtalmique (L1) comprenant les étapes suivantes :
- approvisionner une monture de lunettes (10) comprenant au moins une partie temporale (113) dotée d'un drageoir (11) destiné à permettre l'emboîtement d'une lentille ophtalmique ;
- déterminer la forme du profil du drageoir (11) en un point de ladite monture (10), **caractérisé en ce que** la forme du profil du drageoir (11) est déterminée en un point de la partie temporale (113) de ladite monture (10) ;
- comparer la forme du profil du drageoir (11) déterminé en un point de la partie temporale (113) de la monture (10) à une base de données.

2. Procédé selon la revendication 1 où la détermination de la forme du profil du drageoir (11) se fait uniquement en un point pour chacun des cercles de la monture (10).

3. Procédé selon l'une quelconque des revendications précédentes où la monture (10) est une monture fermée.

4. Procédé selon l'une quelconque des revendications 1 à 2 où la monture est une monture semi-ouverte.

5. Procédé selon la revendication précédente où l'on détermine si la monture (10) résulte d'une déformation d'un fil drageoir sur un bol ou d'une déformation d'un fil drageoir avec une machine à cercler 3D.

6. Procédé selon l'une quelconque des revendications précédentes où l'on associe à la forme du drageoir (11), déterminée en un point de la partie temporale (113) de la monture (10), une donnée d'évolution de l'inclinaison du drageoir le long du parcours de la monture.

7. Procédé de fabrication d'une lentille ophtalmique (L1) comprenant les étapes suivantes :
- déterminer au moins les paramètres de monturisation d'une monture de lunettes (10) choisie selon l'une quelconque des revendications 1 à 6.
- calculer les paramètres de détourage comprenant le contour de la lentille finale et la forme d'un biseau (20) le long de ce contour afin de permettre l'emboîtement de la monture de lunettes choisie.

## Claims

1. Method of determining parameters for fitting an ophthalmic lens (L1) to a frame, including the following steps:
- providing an eyeglass frame (10) including at least one temple portion (113) having a bezel (11) adapted to enable the nesting of an ophthalmic lens;
- determining the shape of the profile of the bezel (11) at a point of said frame (10), **characterized in that** the shape of the profile of the bezel (11) is determined at a point in the temple portion (113) of said frame (10);
- comparing the shape of the profile of the bezel (11) as determined at a point in the temple portion (113) of the frame (10) to a data base.

2. Method according to Claim 1 wherein the shape of the profile of the bezel (11) is determined at only one point for each of the rims of the frame (10).

3. Method according to either of the preceding claims in which the frame (10) is a closed frame.

4. Method according to either of Claims 1 or 2 wherein the frame is a semi-open frame.

5. Method according to the preceding claim wherein whether the frame (10) is the result of deformation of a bezel wire on a bowl or of deformation of a bezel wire using a 3D rim-shaping machine is determined.

6. Method according to any of preceding claims wherein the shape of the bezel (11), as determined at a point in the temple portion (113) of the frame (10) is associated with data concerning the evolution of the inclination of the bezel around the frame.

7. Method of fabricating an ophthalmic lens (L1), comprising the following steps:
- determining at least the framing parameters of a chosen eyeglass frame (10) according to any one of Claims 1 to 6,
- calculating trimming parameters including the contour of the finished lens and the shape of a bevel (20) along that contour in order to enable nesting in the chosen eyeglass frame.

## Patentansprüche

1. Verfahren zur Bestimmung von Parametern, um eine Augenlinse (L1) mit einem Gestell zu versehen, umfassend die folgenden Schritte:
- Bereitstellen eines Brillen-Gestells (10), das wenigstens einen Schläfen-Teil (113) umfasst, der mit einer Nut (11) ausgestattet ist, die dazu bestimmt ist, das Einpassen einer Augenlinse zu gestatten;
- Bestimmen der Form des Profils der Nut (11) in einem Punkt des Gestells (10), **dadurch gekennzeichnet, dass** die Form des Profils der Nut (11) in einem Punkt des Schläfen-Teils (113) des Gestells (10) bestimmt wird;
- Vergleichen der in einem Punkt des Schläfen-Teils (113) des Gestells (10) bestimmten Form des Profils der Nut (11) mit einer Datenbank.

2. Verfahren nach Anspruch 1, wobei die Bestimmung der Form des Profils der Nut (11) nur in einem Punkt für jede der Fassungen des Gestells (10) erfolgt.

3. Verfahren nach einem der vorhergehenden Ansprüche, wobei das Gestell (10) ein geschlossenes Gestell ist.

4. Verfahren nach einem der Ansprüche 1 oder 2, wobei das Gestell ein halb-offenes Gestell ist.

5. Verfahren nach dem vorhergehenden Anspruch, wobei bestimmt wird, ob das Gestell (10) aus einer Deformation eines Nut-Drahtes an einer Schale oder aus einer Deformation eines Nut-Drahtes mit einer 3D-Umreifungsmaschine resultiert.

6. Verfahren nach einem der vorhergehenden Ansprüche, wobei mit der in einem Punkt des Schläfen-Teils (113) des Gestells (10) bestimmten Form der Nut (11) eine Angabe zur Entwicklung der Neigung der Nut entlang des Wegs des Gestells verbunden wird.

7. Verfahren zur Herstellung einer Augenlinse (L1), umfassend die folgenden Schritte:
- Bestimmen von wenigstens den Parametern für das Versehen mit einem ausgewählten Brillen-Gestell (10) nach einem der Ansprüche 1 bis 6,
- Berechnen der Zuschneideparameter, umfassend die Kontur der finalen Linse und die Form einer Kante (20) entlang dieser Kontur, um das Einpassen des ausgewählten Brillen-Gestells zu gestatten.
